# EUROPÄISCHE PATENTANMELDUNG

(11) **EP 1 762 356 A1**
(43) Veröffentlichungstag der Anmeldung: **14.03.2007**
(21) Anmeldenummer: 06018058.5
(22) Anmeldetag: 30.08.2006
(51) Int. Cl.: B29C 43/00, F16D 69/00, B29C 44/00, B29C 37/00

(54) **Verfahren und Vorrichtung zur Herstellung von Reibbelägen**

(30) Priorität: 07.09.2005 DE 102005042424
(71) Anmelder: TMD Friction Services GmbH, 51381 Leverkusen (DE)
(72) Erfinder: Hogenkamp, Wolfgang, 42855 Remscheid (DE)
(74) Vertreter: Müller, Eckhard

(57) **Zusammenfassung**

Die Erfindung betrifft ein Verfahren und eine Vorrichtung zur Herstellung von Reibbelägen, wobei eine beheizbaren Pressform (1, 2) mit pulverförmiger Rohmasse (3) befüllt und mittels einer Presseinrichtung (1) unter Einwirkung von Wärme verdichtet wird. Zudem wird zur Bildung von Poren im Reibbelag mittels in der Rohmasse (3) enthaltene oder während des Pressvorgangs in der Rohmasse (3) entstehende Gase, die Pressform (1, 2) im Wesentlichen gasdicht abgeschlossen und ein auf die Pressform (1, 2) ausgeübter Pressdruck (7) geregelt. Die beim Pressvorgang entstehenden Gase und das Regeln des Pressdrucks ermöglichen ein Aufschäumen der Rohmasse (3) und eine entsprechende Porenbildung im Reibbelag und sorgen für eine vorgegebene Dichte und Porosität. Vorzugsweise werden hierfür der Rohmasse (3) gasbildende Bindemittel, gasbildende oder verdampfende Zusatzstoffe beigefügt (Figur 2).

## Beschreibung

Die vorliegende Erfindung betrifft ein Verfahren und eine Vorrichtung zur Herstellung von Reibbelägen.

### Stand der Technik

Reibbeläge, insbesondere für Scheibenbremsen oder Kupplungen für Fahrzeuge werden aus einer pulverförmigen, Bindemittel enthaltenden Rohmasse mittels eines Pressvorganges hergestellt. Als Bindemittel werden hierbei zumeist Phenolharze verwendet, die bei dem Press- oder Formgebungsvorgang unter Bildung von Reaktionsgasen, wie zum Beispiel Ammoniak oder Wasserdampf, vernetzen. Solche Reaktionsgase entstehen hauptsächlich in der plastischen Phase (B-Phase) der Bindemittelreaktion.

Zudem enthält das pulverförmige oder granulare Ausgangsmaterial zumeist Lufteinschlüsse, die die Herstellung des Reibbelags während des Pressvorgangs, insbesondere aufgrund der Hitzeeinwirkung, beeinflussen können.

So ist beispielsweise aus der DE 102 18 642 A1 bekannt, dass die in der Rohmasse entstehenden oder vorhandenen Gase aus dem Reibbelag entfernt werden müssen. Dies geschieht in der Regel zwischen den einzelnen Pressvorgängen, da ein Ableiten der Gase für den Ablauf von Bindemittelreaktionen und zur Herstellung eins homogenen Reibbelags notwendig ist. Zur Entgasung eines Reibbelags wird das Presswerkzeug geöffnet, d.h. der Pressstempel entgegen der Pressbewegung verfahren und nach der Entgasung des Reibbelages wieder in Pressstellung gebracht. Eine Entgasung des Reibbelags kann auch während des Presshubs über im Pressstempel ausgebildete Bohrungen erfolgen.

Weiterhin kann es vorgesehen sein, dass die abzuführenden gas- oder dampfförmigen Medien während und/oder nach dem Pressvorgang radial oder/und über die dem Presswerkzeug abgewandte Seite des Reibbelages abgeführt werden, wobei der vom Presswerkzeug auf den Reibbelag ausgeübte Pressdruck zumindest auf reduziertem Pegel aufrecht erhalten wird.

Durch die verschiedenen Entgasungvorgänge werden stets Reibbeläge hoher Dichte und geringer Porosität erreicht, die jedoch insbesondere für das Komfortverhalten im Einbauzustand in einem Kraftfahrzeug nicht immer von Vorteil sind.

Aus der DE 100 40 996 A1 ist ein Verfahren bekannt, Presslinge niedriger Dichte herzustellen. Hierbei ist ein an den Heisspressvorgang einschließlich des Entlüftens der Pressform anschließender Verfahrensschritt wesentlich, indem der weiterhin erhitzte Pressling in einem voreingestellten konstanten Volumen der Pressform gehalten wird, in welches hinein er sich ausdehnen kann.

Eine auf die Pressform ausgeübte Zuhaltekraft beziehungsweise eine Verriegelung der Pressform dient dazu, das voreingestellte Volumen der Pressform konstant zu halten und einen sich ausdehnenden Pressling nicht aus der Pressform austreten zu lassen. Die Verriegelung dient nicht dazu, den Pressling unter Verminderung seines Volumens zu komprimieren.

Die Dichte des Presslings, seine Porosität beziehungsweise die von ihm aufgenommene Luftmenge ergeben sich hierbei aus dem Verhältnis des Einsatzgewichtes des von der Pressform aufgenommenen Grünlings, bzw. Wicklings und des eingestellten Volumens der Pressform; dieses Volumen bleibt während des sich an den Heisspressvorgang anschließenden Verfahrensschritts eines weiteren Erhitzens des Presslings in der Pressform konstant.

Die Dichte eines Reibbelags bestimmt vor allem die Kompressibilität und somit die charakteristischen Reibeigenschaften und das Kontaktverhalten des Belags.

Weiterhin ist aus der DE 695 12 957 T3 ein Verfahren sowie eine Vorrichtung zur Herstellung von Scheibenbremsbelägen bekannt, wobei der Reibbelag mit vorgegebener Porosität in einem Hohlraum einem Formpressvorgang unter Wärmeeinwirkung unterzogen wird.

Ein ähnliches Verfahren ist auch aus der DE 691 17 298 T2 bekannt.

### Problem

Das Ausdehnen des Reibbelages oder des Presslings auf ein vorgegebenes Volumen und das Einstellen einer damit verbundenen Dichte erfolgt im Stand der Technik im Anschluss an den Heisspressvorgang und das sich daran anschließende Entlüften der Pressform. Dieses nach dem Heisspressvorgang stattfindende Ausdehnen auf ein voreingestelltes konstantes Volumen erfordert stets einen zusätzlichen, im Vergleich zum Pressvorgang länger währenden Vorgang, bei dem die Pressform mit einer definierten Haltekraft verschlossen werden muss.

Hierbei muss stets dafür Sorge getragen werden, dass die Pressform ein vorgegebenes konstantes Volumen aufweist bzw. dass eine vorgegebene Haltekraft auf die Pressform einwirkt.

### Aufgabe der Erfindung

Der Erfindung liegt demgegenüber die Aufgabe zugrunde, Reibbeläge geringer Dichte und vorgegebener Porosität der eingangs genannten Art effizienter und fertigungsrationeller herzustellen und ein entsprechendes Herstellungsverfahren zu verbessern.

### Erfindung

Die der Erfindung zugrunde liegende Aufgabe wird mit Hilfe eines Verfahrens gemäß Patentanspruch 1 und einer Vorrichtung gemäß Patentanspruch 13 gelöst. Weitere vorteilhafte Ausführungsformen der Erfindung sind in den Unteransprüchen angegeben.

Die Erfindung betrifft ein Verfahren zur Herstellung von Reibbelägen, insbesondere für Scheibenbremse oder Kupplungen von Fahrzeugen. Nach den erfindungsgemäßen Verfahren wird eine beheizbare Pressform mit pulverförmiger Rohmasse gefüllt.

Anschließend wird die Rohmasse mittels einer Presseinrichtung und unter Einwirkung von Wärme verdichtet. Hierbei wird die Pressform im Wesentlichen gasdicht abgeschlossen, so dass die in der Rohmasse enthaltenen oder während des Pressvorgangs in der Rohmasse entstehenden Gase die Pressform und somit auch die in der Pressform eingeschlossene Rohmasse im Wesentlichen nicht verlassen können.

Zudem wird der durch die Presseinrichtung auf die Pressform ausgeübte Pressdruck zur Bildung von Poren im Reibbelag zumindest zeitweise eingestellt. Dies ermöglicht insbesondere, dass der auf die Pressform ausgeübte Pressdruck während des Heisspressvorgangs zur Bildung von Poren im Reibbelag verringert wird, wodurch ein Aufschäumen des Reibbelages unter Bildung von Poren erzielt wird.

Diese blasenförmigen und Schaum bildenden Poren entstehen durch in der Reibmasse vorhandene oder innerhalb der Reibmasse gebildete Gasblasen, die aufgrund der im Wesentlichen gasdicht abgeschlossenen Pressform nicht entweichen und damit die blasenförmigen, schaumartigen Hohlräume bzw. Poren im Reibbelag erzeugen.
Das Einstellen des Pressdrucks kann hierbei entweder durch eine direkte Veränderung des auf die Pressform auszuübenden Drucks oder aber auch indirekt durch anderweitiges Einstellen der Presseinrichtung, z.B. mittels eines vorgegebenen Verstellwegs des Presswerkzeugs erfolgen.

Demgemäß kann bereits während des Heisspressvorganges ein Reibbelag mit geringer Dichte und einer vorgegebenen Porosität hergestellt werden. Ein derartiges Herstellungsverfahren zeichnet sich vor allem darin aus, dass der Reibbelag bereits nach dem Durchlaufen des Heisspressvorganges seine endgültige äußere Form angenommen hat, die sich während des sich außerhalb der Presse anschließenden Härtevorgangs im Wesentlichen nicht mehr ändert.

Anders als im Stand der Technik vorgesehen, ermöglicht die Erfindung somit, dass sich bei an den Heißpressvorgang anschließenden Verfahrensschritten die Formgebung des Reibbelags nicht mehr wesentlich ändert. Insbesondere muss bei solch nachfolgenden Verfahrensschritten nicht mehr darauf geachtet werden, dass das Volumen der Pressform auf einem voreingestellten konstanten Volumen bleibt. Das Volumen wird beim oder für den Pressvorgang fixiert. Auch entsprechende Vorrichtungen und Maßnahmen, die ein unkontrolliertes Ausdehnen des Reibbelags verhindern sollen, werden somit in vorteilhafter Weise obsolet.

Eine Kontrolle über das Volumen der Pressform oder über den auf die Pressform ausgeübten Druck muss daher lediglich nur für den Heisspressvorgang, nicht aber für sich daran anschließende Verfahrensschritte gewährleistet sein, was sich vorteilhaft auf die Prozessökonomie des Herstellungsverfahrens auswirkt.

Bei einer ersten vorteilhaften Ausgestaltung der Erfindung wird die Pressform mittels der Presseinrichtung im Wesentlichen gasdicht abgeschlossen. Die Pressform kann hierfür beispielsweise mit einer Dichtung ausgestattet werden. Weiterhin ist denkbar, dass das Presswerkzeug passgenau auf die Pressform abgestimmt ist, so dass ein Entweichen von Gas während des Pressvorganges bereits durch geometrischen Formen des Presswerkzeugs und der Pressform in erforderlicher Weise verhindert wird.

Unter Umständen kann es sogar genügen, dass keine besonderer Dichtungsmaßnahmen getroffen werden müssen, sondern dass lediglich von einem Entlüftungsvorgang Abstand genommen wird. Die Presseinrichtung beziehungsweise das Presswerkzeug kann hierbei im Wesentlichen durch einen Pressstempel realisiert werden, der auf die Geometrie der Pressform angepasst ist und direkt auf die in die Pressform eingefüllte pulverförmige Rohmasse einwirkt.

Nach einer weiteren bevorzugten Ausführungsform der Erfindung enthält die pulverförmige Rohmasse ein zumindest beim Pressvorgang gasbildendes Bindemittel, wie zum Beispiel Phenolharz. Unter der Wärme- und Druckeinwirkung während des Pressvorgangs kommt es typischerweise zu einer Vernetzung des Bindemittels, die einerseits ein Verbinden und/oder Verkleben der Reibstoffpartikel der Rohmasse zum Reibbelag und andererseits die Bildung zumindest eines Reaktionsgases bewirkt.

Das beim Vernetzungsprozess des Bindemittels entstehende Gas oder die entstehenden Gase tragen schließlich zur Porenbildung im Reibbelag und damit zu seiner Porosität beziehungsweise Dichte bei. Typischerweise geht das Bindemittel beim Pressvorgang durch die über die Pressform einbringbare Wärme in einen plastischen Zustand (B-Zustand) über, bei dem die Rohmasse im Wesentlichen fließfähig ist. Damit können Dichte- und Spannungsunterschiede in der Rohmasse durch eine entsprechende Fließbewegung ausgeglichen werden, wodurch eine gewünschte Homogenität des Reibbelags erreicht werden kann. Durch den plastischen Zustand des Bindemittels und die in diesem Zustand erfolgende Abspaltung von Reaktionsgasen kann das Bindemittel aufschäumen. Dampfblasen aus Wasser und Ammoniak formen das plastische Bindemittel zu einer schaumigen Struktur.

Auch können durch die Fließbewegung des plastischen Bindemittels Agglomerate ausgeglichen werden, die infolge von in der Rohmasse enthaltenen armierenden Fasern entstehen können.

Weiterhin ist vorgesehen, dass die Rohmasse zumindest einen beim Pressvorgang verdampfenden Zusatzstoff, wie zum Beispiel Wasser, enthält. Derartige Zusatzstoffe haben eine gasbildende Funktion während des Pressvorgangs insbesondere in der plastischen Phase des Bindemittels und unterstützen somit die Bildung der erwünschten Poren.

Als Zusatzstoff für die Rohmasse sind weiterhin feste Stoffe denkbar, die zunächst unter der Wärmeeinwirkung beim Pressvorgang schmelzen und anschließend einer gasbildenden Zersetzung oder einem Verdampfen unterliegen.

Beispielsweise sind hierfür geschäumte oder gequollene Festkörper, wie zum Beispiel Styroporpartikel, denkbar, die vor dem Eindringen in die Mischung von Bindemittel umhüllt werden. Das Bindemittel vernetzt schließlich unter der beim Pressvorgang vorherrschenden Temperatur, während die geschäumten oder gequollenen Partikel schmelzen und anschließend vergasen. Auf diese Weise können, von einer stabilen Wandung umgebene, Hohlräume direkt beim Pressvorgang gebildet werden.

Weiterhin ist vorgesehen, dass die Rohmasse zumindest einen beim Pressvorgang gasbildenden Zusatzstoff, wie zum Beispiel ein organisches Treibmittel, enthält. Geeignete Treibmittel werden beispielsweise im pulverförmigen Zustand der Rohmasse beigemischt und bilden unter der Wärme- beziehungsweise Druckeinwirkung beim Heisspressvorgang Gase, die für die Erzeugung von Poren nützlich sind. Geeignet hierfür sind insbesondere bekannte Backtriebmittel, wie zum Beispiel Natriumhydrogenkarbonate, die unter Temperatureinwirkung Kohlendioxid freisetzen. Als weitere Treibmittel können zum Beispiel Ammoniumkarbonat, Ammoniumhydrogenkarbonat sowie Ammoniumkarbamat oder beliebige diese Stoffe enthaltenden Mischungen dienen.

Nach einem weiteren Gedanken der Erfindung ist es vorgesehen, dass für eine im Wesentlichen homogenen Verteilung von Gasblasen oder Poren in der Rohmasse während des Pressvorgangs die Rohmasse eine vorgegebene Viskosität aufweist. So ist insbesondere vorgesehen, dass die Viskosität der Rohmasse während des Pressvorgangs in einem Bereich liegt, der zum einen ermöglicht, dass Dichteschwankungen und Spannungsunterschiede durch eine entsprechende Fließbewegung der Rohmasse ausgeglichen werden können, zum anderen aber entstehende Gasblasen im Wesentlichen nicht entgegen der Schwerkraft nach oben driften, was eine inhomogene Verteilung von Poren im Reibbelag zur Folge hätte.

Bei der Erfindung ist insbesondere vorgesehen, dass die Viskosität zum einen über die Zusammensetzung der Rohmasse und zum anderen über die Temperatur beim Pressvorgang sowie durch die Presskraft der Presseinrichtung gezielt eingestellt werden kann. Das Mischverhältnis der Rohmasse, die Temperatur der Pressform, der Druck der Presseinrichtung sowie die Dauer des Pressvorganges werden hierbei zum Erreichen einer möglichst homogenen idealen Viskosität aufeinander abgestimmt.

Nach einer weiteren vorteilhaften Ausführung der Erfindung wird die von der Presseinrichtung auf die Pressform ausgeübte Presskraft beim Verdichten der Rohmasse gesteuert oder geregelt. Während des Heisspressvorgangs wirkt somit eine gesteuerte oder geregelte und mitunter variable Presskraft auf die Pressform und die darin enthaltene Rohmasse.

Insbesondere ist vorgesehen, dass die Presskraft der Presseinrichtung abhängig von einem in der Pressform herrschenden Gegendruck gesteuert oder geregelt wird. Der in der Pressform herrschende Gegendruck wird unter anderem durch die beim Heisspressen entstehenden Gase oder durch die in der Rohmasse bereits enthaltenen Gase, wie z.B. durch beim Verdichtungsvorgang verdichtete und erwärmte im Pulverhaufwerk enthaltene Luft, maßgeblich bestimmt. In vorteilhafter Weise halten sich die durch die Presseinrichtung ausübbare Presskraft und der in der Pressform herrschende Gegendruck die Waage, so dass ein Aufschäumen der Rohmasse durch die Gasbildung in der Rohmasse ermöglicht wird, wobei die Presseinrichtung dazu ausgebildet ist, einem in der Pressform anwachsenden Gasdruck gegenüber nachzugeben.

In diesem Fall ist insbesondere vorgesehen, dass das Presswerkzeug, insbesondere der Pressstempel der Presseinrichtung, entgegen der Pressrichtung zur Vergrößerung des Volumens der Pressform durch den in der Pressform herrschenden Gegendruck oder Gasdruck verschoben wird. Die Pressform selbst sollte während dieser so genannten Schaumbildung des Reibbelages im Wesentlichen gasdicht oder nur begrenzt diffusionsfähig sein, damit eine gleichmäßiger Gasdruck in der Pressform erzeugt werden kann.

Das kontrollierte, gesteuerte oder geregelte Nachgeben der Presseinrichtung ermöglicht insbesondere ein unter einem gleich bleibenden Druck stattfindendes Aufschäumen des Reibbelages, so dass letztlich ein Reibbelag geringer Dichte mit einer erforderlichen Porosität und einem gewünschten Komfortverhalten bereits während des Heisspressvorgangs hinsichtlich seiner geometrischen Form herstellbar ist.

Das geregelte Öffnen der Form wird begrenzt, wenn ein vorbestimmtes Maß erreicht worden ist und die aushärtende Vernetzung mit steigender Viskosität der Bindemittel eintritt. Bewegungen in dieser Phase können die sich stabilisierenden Poren schädigen, so dass die mechanische Stabilität des Reibbelages negativ beeinflusst wird. In dieser abschließenden Phase des Verfahrens kann der Druck in der Form ansteigen.

Die regel- oder steuerbare Presseinrichtung ermöglicht somit einen gleich bleibenden Druck im inneren der Pressform. Dies wird insbesondere dadurch erreicht, dass eine durch Gasentwicklung entstehende Erhöhung des Innendrucks in der Pressform durch eine Verringerung der auf die Pressform einwirkenden Presskraft kompensiert werden kann.

Gleichbleibende Druckverhältnisse in der Pressform sind insbesondere für die Entstehung homogener und gleichartiger Poren sowie für eine homogene Dichteverteilung des Reibbelags von Vorteil.

Anstelle eines gleich bleibenden Innendrucks der Pressform während des Heisspressvorgangs kann jedoch auch ein variierender Druck vorgesehen sein. So ist zum Beispiel denkbar, dass zu Beginn des Heisspressvorgangs zum Zweck einer gleichmäßigen und schnellen Wärmeverteilung in der Rohmasse ein relativ hoher Druck und anschließend zur Schaumbildung ein entsprechen niedrigerer Druck eingestellt werden, wobei letzterer z.B. im Wesentlichen dem in der Rohmasse herrschenden Gasdruck entspricht.

Nach einer weiteren Ausführung der Erfindung ist vorgesehen, dass der Pressvorgang bei einer Temperatur von etwa 120° C bis 400° C durchgeführt wird. Vorzugsweise werden der Pressvorgang bei Temperaturen bis zu 300°C durchgeführt, bei der die als Bindemittel verwendeten Phenolharze relativ schnell schmelzen und die zur Schaumbildung erforderlichen Reaktionsgase entwickeln. Weiterhin ist die Verwendung solch hoher Temperaturen beim Heißpressvorgang von Vorteil, da hierdurch die sich anschließende Härtungsprozedur entsprechend verkürzt werden kann.

Nach einer weiteren Ausführung der Erfindung ist vorgesehen, dass das Verdichten der Rohmasse durch einen vorgegebenen Verstellweg der Presseinrichtung bestimmt wird. Ein solches wegabhängiges Verdichten der Rohmasse ist unter fertigungstechnischen Aspekten von Vorteil, da einerseits eine vorgegebene Maßhaltigkeit beziehungsweise ein vorgegebenes Volumen der Reibbeläge direkt eingestellt werden kann. Zudem ist bei einem wegabhängig gesteuerten Verdichten der Rohmasse eine Druckmessung, insbesondere eines in der Pressform herrschenden Gasdrucks zur Regelung der Presseinrichtung nicht notwendig. Auf einen entsprechenden Regelungsmechanismus, der die Presskraft der Presseinrichtung abhängig vom in der Pressform herrschenden Gegendruck regelt, kann daher auch verzichtet werden.

Weiterhin ist vorgesehen, dass zum Erzeugen von Poren unterschiedlicher Größe die Wärmeeinwirkung beim Pressvorgang und/oder die Zeitdauer des Pressvorgangs und/oder die durch die Presseinrichtung auf die eingefüllte Rohmasse ausübbare Presskraft variabel einstellbar ist beziehungsweise sind. Die genannten Parameter können hierzu individuell oder aufeinander abgestimmt zum Erreichen einer vorgegebenen Porengröße eingestellt werden.

Weiterhin ist vorgesehen, dass zum Erzeugen einer vorgegebenen Porendichte im Reibbelag die Wärmeeinwirkung beim Pressvorgang und/oder die Zeitdauer des Pressvorganges und/oder die durch die Presseinrichtung auf die eingefüllte Rohmasse ausübbare Presskraft variabel einstellbar ist beziehungsweise sind. In ähnlicher Weise können hier die genannten Parameter zum Einstellen einer vorgegeben Poredichte im Reibbelag separat oder aufeinander abgestimmt variiert werden.

Weiterhin ist für die Erfindung vorgesehen, dass die Zusammensetzung der Rohmasse und/oder die Größe der Partikel der Rohmasse zum Erzeugen von Poren unterschiedlicher Größe und/oder einer vorgegebenen Porendichte im Reibbelag angepasst ist beziehungsweise sind. Insbesondere kann die Größe und die Dichte der im Reibbelag zu erzeugenden Poren durch das Beimischen von gasbildenden Bindemitteln beziehungsweise gasbildenden Zusatzstoffen gezielt eingestellt werden. Insbesondere kann die Größe der zu bildenden Poren durch die Abmessungen gasbildender Zusatzstoffe beziehungsweise gasbildender Treibmittel, die auch in granularer Form vorliegen können, gezielt gesteuert werden.

Nach einer weiteren bevorzugten Ausführungsform der Erfindung wird zur Bildung der Poren im Reibbelag der auf die Pressform ausgeübte oder auszuübende Pressdruck über den Verstellweg der Presseinrichtung bestimmt. Hierbei wird unter Erwärmung zunächst die Rohmasse mittels der Presseinrichtung verdichtet und anschließend das Presswerkzeug um einen vorgegebenen Weg verfahren.

Eine derartige Bewegung des Presswerkzeugs um einen vorgegebenen Weg vergrößert das Volumen innerhalb der Pressform, in welches sich die Schaum bildende Reibbelagmasse ausdehnen kann. Auf diese Art und Weise dient das Endmaß des herzustellenden Reibbelags als Kontrollparameter für das Presswerkzeug während der Schaum bildenden Phase.

Durch diese positionsbestimmte Bewegung des Presswerkzeugs wird somit ein Kontrollieren eines vorherrschenden Drucks oder Gegendrucks überflüssig, und das Presswerkzeug wird unabhängig von dem in der Pressform vorherrschenden Druck an die durch das Endmaß des Reibbelags vorgegebene Endposition gefahren.

Die Erfindung betrifft weiterhin eine Vorrichtung zur Herstellung von Reibbelägen, insbesondere für Scheibenbremsen oder Kupplungen für Fahrzeuge, aus einer pulverförmigen Rohmasse. Die Vorrichtung verfügt über eine beheizbare Pressform mit einer zugeordneten Presseinrichtung, die mit der pulverförmigen Rohmasse befüllbar ist. Die Pressform ist im Wesentlichen zur Bildung von Poren im Reibbelag mittels in der Rohmasse enthaltener oder während des Pressvorganges in der Rohmasse entstehender Gase gasdicht abschließbar. Zudem ist der durch die Presseinrichtung auf die Pressform ausübbare Pressdruck anpassbar.

Für die Anpassung des Pressdrucks ist insbesondere eine steuerbare oder regelbare Steuereinrichtung vorgesehen, welche insbesondere ein Reduzieren des Pressdrucks während des Heisspressvorganges zur Schaumbildung des Reibbelags steuert oder regelt. Auf diese Art und Weise ermöglicht die Vorrichtung zum Beispiel einen in der Pressform vorherrschenden gleich bleibenden Druck, so dass eine möglichst homogene Poren- und/oder Dichteverteilung des Reibbelags erzielt wird.

Weiterhin ist es vorgesehen, dass die Steuer- oder Regeleinrichtung zur Bestimmung der Porengröße und/oder Porendichte im Reibbelag während des Pressvorganges zur Regelung der durch die Presseinrichtung auf die Rohmasse ausübbare Presskraft und/oder des Verstellwegs der Presseinrichtung vorgesehen ist. Mit Hilfe der Steuer- oder Regeleinrichtung ist somit eine situationsbedingte Adaption der Presskraft während des Heisspressvorgangs an den in der Pressform herrschenden Druck jeweils möglich.

Weitere Ziele, Vorteile, Merkmale und Anwendungsmöglichkeiten der vorliegenden Erfindung ergeben sich aus der nachfolgenden Beschreibung der Ausführungsbeispiele anhand der Zeichnungen. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigen:
- Figur 1: einen schematischen Querschnitt durch eine Presseinrichtung und
- Figur 2: ein Flussdiagramm des erfindungsgemäßen Herstellungsverfahrens.

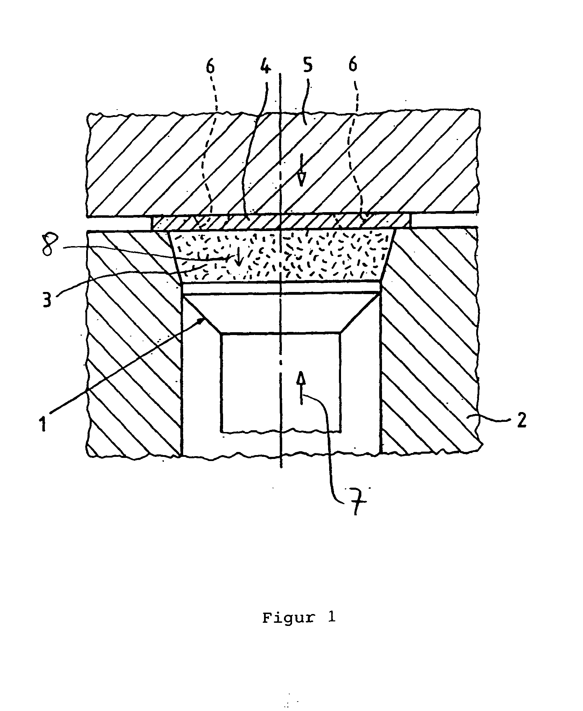

Figur 1 zeigt eine Vorrichtung zum Herstellen von Reibbelägen, insbesondere für Scheibenbremsen oder Kupplungen von Fahrzeugen. Diese Pressvorrichtung weist einen Pressstempel 1 auf, der geführt von einer Umfangswandung 2 auf und ab bewegbar ist. Zusammen mit der Umfangswandung 2 bildet die Oberseite des Pressstempels 1 eine Aufnahme oder eine Pressform für die im Ausgangszustand pulverförmige Rohmasse 3, die durch den Heisspressvorgang zum Reibbelag verdichtet wird.

Die Schnittansicht in Figur 1 zeigt den bereits verdichteten Reibbelag, der beim Heisspressvorgang mit der Trägerplatte 4 verpresst wird. Zum Verdichten der Rohmasse 3 wird mittels des Pressstempels 1 und mit Hilfe der Gegendruckplatte 5 ein erforderlicher Druck auf die Rohmasse 3 ausgeübt. Zudem wird über die Umfangswandung 2 und/oder den Pressstempel 1 eine erforderliche Wärmemenge in die Rohmasse eingebracht. Zum Befüllen der durch die Umfangswandung 2 und den Presstempel 1 gebildeten Pressform wird die Pressvorrichtung geöffnet, indem die Gegendruckplatte 5 gegenüber der stationären Umfangswandung 2 angehoben wird.

Nach dem Befüllen der Pressform mit der Rohmasse 3 wird schließlich die Trägerplatte 4 oberhalb der Pressform auf die Umfangswandung 2 aufliegend angeordnet und die Gegendruckplatte 5 hiermit in Anlage gebracht. Beim Pressvorgang wird nun die Rohmasse 3 auf eine erforderliche Temperatur aufgeheizt und mittels des Pressstempels 1 auf ein vorgegebenes Maß oder mittels eines vorgegebenen Drucks verdichtet. Bei diesem Heisspressvorgang kann beispielsweise die pulverförmige Rohmasse bis hin zu einem Fünftel ihres ursprünglichen Volumens verdichtet werden.

Die Trägerplatte 4 weist zudem Öffnungen 6 auf, die typischerweise leicht konisch ausgebildet sind. Derartige Öffnungen 6 sind nicht obligatorisch, ermöglichen jedoch eine formschlüssige Verbindung des durch den Heisspressvorgang zu bildenden Reibbelags mit der Trägerplatte 4. Für ein zuverlässiges Verpressen der Rohmasse 3 mit der Trägerplatte 4 ist jedoch der beim Verdichten der Rohmasse 3 gebildete Kraftschluss zwischen Rohmasse 3 und der Trägerplatte 4 in der Regel ausreichend.

Zur definierten Bildung von Poren im Reibbelag beziehungsweise zum Aufschäumen des Reibbelags ist ferner vorgesehen, dass die Pressform im Wesentlichen gasdicht abgeschlossen wird. Insbesondere sind der Pressstempel 1 und die Umfangswandung 2 passgenau aufeinander abgestimmt, so dass zwischen Pressstempel 1 und Umfangswandung 2 beim Heisspressvorgang in der Rohmasse 3 entstehende und oder vorhandene Gase im Wesentlichen nicht entweichen können.

Insbesondere durch das Erhitzen der Rohmasse 3 beim Pressvorgang bilden die in der Rohmasse enthaltenen Bindemittel, wie zum Beispiel Phenolharze, Reaktionsgase, wie zum Beispiel Ammoniak oder Wasserdampf, die zu einer Erhöhung des Innendrucks in der Pressform führen. Zudem gehen die Bindemittel unter der Temperatur- und Druckeinwirkung in einen plastischen und fließfähigen Zustand über, indem die Bindemittel eine Schmierwirkung aufweisen, wodurch dichteausgleichende Fließbewegungen innerhalb der Rohmasse stattfinden können. Ferner können die durch die armierenden Phasen der Rohmasse entstehenden Agglomerate aufgrund der Viskosität und der plastischen Eigenschaften der Rohmasse derart ausgeglichen werden, dass sich Dichte- und Spannungsunterschiede innerhalb des Reibbelags egalisieren.

Da die porenbildenden Gase hauptsächlich in der plastischen Phase des Bindemittels entstehen, wird die durch den Pressstempel 1 erzeugte Presskraft 7 typischerweise dem in der Rohmasse 3 herrschenden oder vorliegenden Gasdruck beziehungsweise Gegendruck 8 angepasst. Die Reduzierung der Presskraft 7 des Pressstempels 1 ermöglicht schließlich die Ausdehnung der während des Heisspressvorgangs entstehenden Gase innerhalb der Rohmasse 3, wodurch die gewünschten Poren im Reibbelag gebildet werden.

Typischerweise wird die Presskraft 7 des Pressstempels 1 an den in der Pressform herrschenden Gasdruck beziehungsweise Gegendruck angepasst. Wenn sich der durch die Presskraft 7 auf die Pressform ausgeübte Druck und der im Reibbelag herrschende Gegendruck die Waage halten, kann sich der Reibbelag unter einer Schaum- oder Porenbildung und unter einer Abwärtsbewegung des Presstempels 1 ausbilden.

Die Entstehung porenbildender Gase kann auf vielfältige Art und Weise, beispielsweise unter Zugabe gasbildender Zusätze oder Triebmittel zur Rohmasse, realisiert werden. Hierbei kommen verdampfende Zusatzstoffe, wie zum Beispiel Wasser, oder aber auch Kohlendioxid erzeugende Treibmittel, wie zum Beispiel Natrium- oder Ammoniumkarbonate, zur Anwendung. Zudem ist die Zugabe granularer und mit Bindemittel umschlossener Zusatzstoffe denkbar, die unter Hitzeeinwirkung zunächst schmelzen und nach einer Vernetzung des umhüllenden Bindemittels unter weiterer Temperatureinwirkdung verdampfen oder zumindest ein gasförmiges Reaktionsprodukt bilden. Auf diese Weise können relativ große, nahezu kugelförmige Poren im Reibbelag erzeugt werden.

Die Größe sowie die Dichteverteilung der im Reibbelag entstehenden Poren kann zudem durch die Zusammensetzung der Rohmasse 3 sowie durch die beim Heisspressvorgang eingestellte Temperatur, die Dauer des Vorganges und durch die während des Pressvorganges durch den Pressstempel 1 ausgeübte Presskraft 7 eingestellt werden.

Weiterhin kann vorgesehen sein, dass der Pressstempel 1 durch eine Steuer- oder Regelungseinrichtung während des Heisspressvorgangs gezielt nach unten zur Vergrößerung der Pressform verschoben wird. Ein derartiges Verschieben des Presstempels 1 kann typischerweise über den in der Rohmasse 3 sich aufbauenden oder vorherrschenden Gas- oder Gegendruck gesteuert werden. Alternativ ist auch eine wegorientierte Steuerung oder Regelung des Verstellwegs des Presstempels 1 denkbar.

Diese ist insbesondere im Hinblick auf fertigungstechnische Aspekte von Vorteil, da es hierfür nicht unbedingt einer druckabhängigen Regelungseinrichtung bedarf. Zudem garantiert ein wegabhängiges Verfahren des Pressstempels 1 eine hohe Maßhaltigkeit für die zu erzeugenden Reibbeläge. Zur Einhaltung einer vorgegebenen Porengröße oder -dichte im Reibbelag erscheint jedoch eine druckabhängige Steuerung des Presstempels 1 vorteilhaft.

Beim Öffnen des Presswerkzeuges ist darauf zu achten, dass der in der Belagmatrix anliegende Gasdruck so abgebaut wird, dass er die Belagstruktur nicht schädigt. Der Ausstoßvorgang erfolgt idealerweise nach dem in der DE 102 18 642 A1 offenbarten Prinzip des entformten Lüftens. Oberwerkzeug und Stempel halten den Belag, während die Form abgesenkt wird, solange, bis der Gasdruck aus den Poren des Belages durch Diffusion über die offenen Belagflanken abgebaut ist.

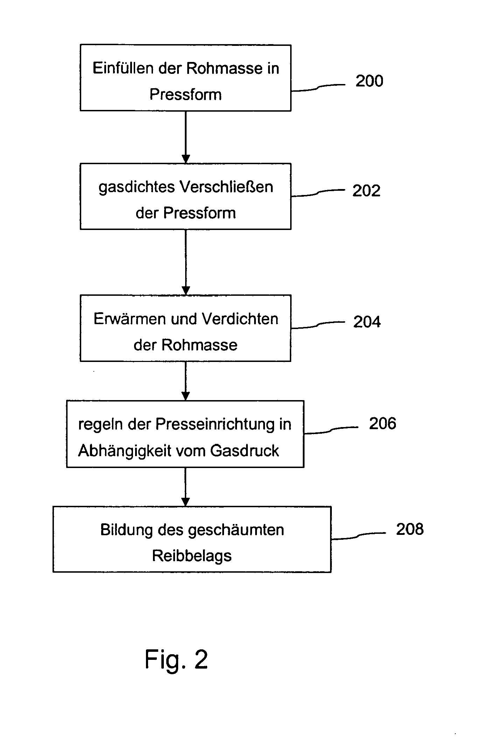

Figur 2 zeigt schematisch ein Flussdiagramm eines Herstellungsverfahrens für Reibbeläge von Scheibenbremsen oder Kupplungen nach der Erfindung.

In einem ersten Schritt 200 wird die pulverförmige Rohmasse 3 in die Pressform eingefüllt. Im darauf folgenden Schritt 202 wird die Pressform mit Hilfe des Presstempels 1 im Wesentlichen gasdicht verschlossen. Zudem wird die Trägerplatte 4, wie in Figur 1 dargestellt, mit der pulverförmigen Rohmasse 3 in Anlage gebracht.

Im Schritt 204 wird der Heisspressvorgang durch Erwärmen und Verdichten der Rohmasse 3 eingeleitet. Die in der Rohmasse 3 enthaltenen Bindemittel gehen hierbei in einen plastischen, fließfähigen Zustand über und beginnen unter Entstehung von Reaktionsgasen zu vernetzen. Zudem werden durch verdampfende Zusatzstoffe oder gasbildende Treibmittel weitere Gase in der Rohmasse 3 erzeugt, sofern der auf die Rohmasse 3 einwirkende Pressdruck dies zulässt.

Im darauf folgenden oder simultan zum Verdichten ablaufenden Schritt 206 wird der Pressdruck der Presseinrichtung beispielsweise abhängig vom in der Pressform vorherrschenden Gas- oder Gegendruck geregelt. Dies entspricht typischerweise einer Verminderung des Pressdrucks, wodurch die für die Porenbildung erforderliche Gasentwicklung im Wesentlichen ermöglicht wird. Im abschließenden Schritt 208 entsteht somit ein geschäumter Reibbelag mit einer geringen Dichte und einer vorgegebenen Porosität; beides sind Parameter, die für ein gewünschtes Komfortverhalten des Reibbelages, insbesondere zur Vermeidung von Geräuschen, maßgeblich sind.

Bei der vorliegenden Erfindung ist insbesondere von Vorteil, dass eine durch Gasentwicklung oder Gaserwärmung im Reibbelag bedingte Ausdehnung des Reibbelags durch die Presseinrichtung extern kontrolliert, gesteuert oder geregelt wird. Eine derartige Steuerung- und/oder Regelung gewährleistet die Erzeugung eines homogenen und vorzugsweise spannungsfreien Reibbelags.

### Bezugszeichenliste

- 1: Pressstempel
- 2: Umfangswandung
- 3: Rohmasse
- 4: Trägerplatte
- 5: Gegendruckplatte
- 6: Öffnungen
- 7: Presskraft
- 8: Gasdruck/Gegendruck

## Patentansprüche

1. Verfahren zur Herstellung von Reibbelägen, insbesondere für Scheibenbremsen oder Kupplungen von Fahrzeugen, mit den Schritten:
- Befüllen einer beheizbaren Pressform (1, 2) mit pulverförmiger Rohmasse (3),
- Verdichten der Rohmasse (3) mittels einer Presseinrichtung (1) unter Einwirkung von Wärme,
**dadurch gekennzeichnet, dass**
- zur Bildung von Poren im Reibbelag mittels in der Rohmasse (3) enthaltener oder während des Pressvorgangs in der Rohmasse (3) entstehender Gase, die Pressform (1, 2) im Wesentlichen gasdicht abgeschlossen und zumindest zeitweise ein auf die Pressform (1, 2) ausgeübter Pressdruck (7) eingestellt wird.

2. Verfahren nach Anspruch 1, **dadurch gekennzeichnet, dass** die Pressform (1, 2) mittels der Presseinrichtung (1) im Wesentlichen gasdicht abgeschlossen wird.

3. Verfahren nach Anspruch 1 oder 2, **dadurch gekennzeichnet, dass** die Rohmasse (3) ein zumindest beim Pressvorgang Gas bildendes Bindemittel, insbesondere Phenolharz, enthält.

4. Verfahren nach einem oder mehreren der Ansprüche 1 bis 3, **dadurch gekennzeichnet, dass** die Rohmasse (3) zumindest einen beim Pressvorgang verdampfenden Zusatzstoff, wie zum Beispiel Wasser, enthält.

5. Verfahren nach einem oder mehreren der Ansprüche 1 bis 4, **dadurch gekennzeichnet, dass** die Rohmasse (3) zumindest einen beim Pressvorgang Gas bildenden Zusatzstoff, insbesondere ein organisches Treibmittel, enthält.

6. Verfahren nach einem oder mehreren der Ansprüche 1 bis 5, **dadurch gekennzeichnet, dass** für eine im Wesentlichen homogene Verteilung von Gasblasen in der Rohmasse (3) während des Pressvorgangs die Rohmasse eine vorgegebene Viskosität aufweist.

7. Verfahren nach einem oder mehreren der vorhergehenden Ansprüche 1 bis 6, **dadurch gekennzeichnet, dass** die Presskraft (7) der Presseinrichtung (1) beim Verdichten der Rohmasse (3) gesteuert oder geregelt wird.

8. Verfahren nach einem oder mehreren der vorhergehenden Ansprüche 1 bis 7, **dadurch gekennzeichnet, dass** der Pressvorgang bei einer Temperatur von etwa 120°C bis 400°C durchgeführt wird.

9. Verfahren nach einem oder mehreren der vorhergehenden Ansprüche 1 bis 8, **dadurch gekennzeichnet, dass** die Presskraft (7) der Presseinrichtung (1) beim Verdichten der Rohmasse (3) abhängig von einem in der Pressform (1, 2) herrschenden Gegendruck (8) gesteuert oder geregelt wird.

10. Verfahren nach einem oder mehreren der vorhergehenden Ansprüche 1 bis 8, **dadurch gekennzeichnet, dass** das Verdichten der Rohmasse (3) durch einen vorgegebenen Verstellweg der Presseinrichtung (1) bestimmt wird.

11. Verfahren nach einem oder mehreren der vorhergehenden Ansprüche 1 bis 10, **dadurch gekennzeichnet, dass** zum Erzeugen von Poren unterschiedlicher Größe die Wärmeeinwirkung beim Pressvorgang und/oder die Zeitdauer des Pressvorgangs und/oder die durch die Presseinrichtung (1) auf die eingefüllte Rohmasse (3) ausübbare Presskraft (7) variabel einstellbar ist bzw. sind.

12. Verfahren nach einem oder mehreren der vorhergehenden Ansprüche 1 bis 11, **dadurch gekennzeichnet, dass** zum Erzeugen einer vorgegebenen Porendichte im Reibbelag die Wärmeeinwirkung beim Pressvorgang und/oder die Zeitdauer des Pressvorgangs und/oder die durch die Presseinrichtung (1) auf die eingefüllte Rohmasse (3) ausübbare Presskraft (7) variabel einstellbar ist bzw. sind.

13. Verfahren nach einem oder mehreren der vorhergehenden Ansprüche 1 bis 12, **dadurch gekennzeichnet, dass** die Zusammensetzung der Rohmasse (3) und/oder die Größe der Partikel der Rohmasse zum Erzeugen von Poren unterschiedlicher Größe und/oder einer vorgegebenen Porendichte im Reibbelag angepasst ist bzw. sind.

14. Verfahren nach einem oder mehreren der vorhergehenden Ansprüche, **dadurch gekennzeichnet, dass** zur Bildung der Poren im Reibbelag der auf die Pressform ausgeübte Pressdruck über den Verstellweg der Presseinrichtung bestimmt wird.

15. Vorrichtung zur Herstellung von Reibbelägen, insbesondere für Scheibenbremsen oder Kupplungen von Fahrzeugen mit einer mit pulverförmiger Rohmasse (3) befüllbaren und beheizbaren Pressform (1, 2) mit zugeordneter Presseinrichtung (1), **dadurch gekennzeichnet, dass** zur Bildung von Poren im Reibbelag mittels in der Rohmasse (3) enthaltener oder während des Pressvorgangs in der Rohmasse (3) entstehender Gase die Pressform (1, 2) im Wesentlichen gasdicht abschließbar und ein auf die Pressform (1, 2) ausübbarer Pressdruck (7) einstellbar ist.

16. Vorrichtung nach Anspruch 15, **dadurch gekennzeichnet, dass** zur Bestimmung der Porengröße und/oder Porendichte im Reibbelag während des Pressvorgangs eine Steuereinrichtung oder Regeleinrichtung zur Steuerung oder Regelung der durch die Presseinrichtung (1) auf die Rohmasse (3) ausübbaren Presskraft (7) und/oder des Verstellwegs der Presseinrichtung (1) vorgesehen ist.
